# EUROPEAN PATENT APPLICATION

(11) **EP 1 236 388 A1**
(43) Date of publication of application: **04.09.2002**
(21) Application number: 02075809.0
(22) Date of filing: 28.02.2002
(51) Int. Cl.: A01C 17/00, A01B 71/06

(54) **A device suitable for use in agriculture and a device for spreading granular and/or pulverulent material**

(30) Priority: 02.03.2001 NL 1017479
(71) Applicant: Lely Enterprises AG, 6300 ZUG (CH)
(72) Inventor: van den Berg, Karel, 2971 BR Bleskensgraaf (NL)
(74) Representative: Corten, Maurice Jean F.M.

(57) **Abstract**

A device suitable for use in agriculture. The device is provided with a rotatable tool (2,2',2'') and with electric current generating means (33) for generating electric current from the rotation of the rotatable tool (2,2',2''). The electric current generating means (33) are at least substantially disposed on the rotatable tool (2,2',2''). The device comprises electronics, such as sensors (21,23,27,37,38,39,42,43), said electronics being fed with electric current generated by the electric current generating means (33). The electronics, such as sensors, is disposed on the rotatable tool (2,2',2''). The device is preferably provided with a sensor (37) for measuring the number of revolutions per minute of the rotatable tool (2,2',2''). The electronics preferably comprises a transmitter (13)/receiver for transmitting signals.

## Description

The invention relates to a device suitable for use in agriculture, said device being provided with a rotatable element.

Such a device, in particular a device for spreading granular and/or pulverulent material, is known from EP-A-0 289 095. This known device comprises measuring members for measuring i.a. the spreading of the granular material. The measuring members are connected with a control mechanism via optical fibres, the optical fibres transmitting measurement data.

The invention aims at providing a device for spreading granular and/or pulverulent material, by means of which there is obtained in a constructively robust, simple and cheap manner an electric current supply, which electric current supply may e.g. be used for measuring members.

According to the invention, for that purpose a device of the above-described type is characterized in that the device is provided with electric current generating means for generating electric current from the rotation of the rotatable tool. Although the device according to EP-A-0 289 095 does not disclose a description in relation to the electric current supply of the measuring members, with a device for spreading granular and/or pulverulent material the electric current is usually supplied from the pulling vehicle. However, for that purpose there are required feeder cables from the pulling vehicle to the rotating blade respectively the spreading disc, which entails constructive problems, because the cables have to pass from a non-rotating vehicle to a rotating blade. According to the invention, this drawback can be obviated by using the rotation of the tool, in this case the blade, for generating the electric current and not to take off the electric current directly from the pulling vehicle.

It will be obvious that the invention is not limited to a device for spreading granular and/or pulverulent material, but may also be applied to all devices suitable for use in agriculture and provided with a rotatable tool, such as rotary harrows, mowing machines, tedders, raking machines, crushers or sowing machines, with which according to the invention the rotation of the rotatable tool is used for generating electric current, so that the electric current has not to be taken off directly from the pulling vehicle.

It is particularly advantageous when the electric current generating means are at least substantially disposed on the rotatable tool.

The device for spreading granular and/or pulverulent material is preferably provided with a spreading disc on which the blade is disposed.

The electric current generating means are advantageously constituted by a dynamo with a stator and a rotor. The rotor may be disposed on the rotatable tool, such as the blade, or on the spreading disc. The rotor may be constituted by a coil, the stator may be constituted by a magnet.

For having the possibility also to supply electric current when the rotatable tool, e.g. the blade, is not rotating, an electric current accumulator is connected with the electric current generating means. The electric current accumulator may e.g. be constituted by a rechargeable battery, an accumulator or a condenser.

In a preferred embodiment of a device according to the invention there is provided electronics, such as sensors. Said electronics is fed with electric current generated by the electric current generating means.

The electronics, such as sensors, may be disposed on the rotatable tool, such as the blade, or on the spreading disc. Alternatively or additionally, electronics may be provided on other components of the device, such as a hopper for granular and/or pulverulent material.

The electronics preferably comprises a sensor for measuring the number of revolutions per minute of the rotatable tool, such as the blade, and/or a load sensor (preferably a series of load sensors) for measuring the force exerted by the granular and/or pulverulent material, in particular fertiliser. The number of revolutions per minute may be measured in a simple manner by analysing the voltage peaks during rotation of the tool.

The known device comprises optical fibres for transmitting data. Such optical fibres may constitute a constructive or operative obstruction. According to the invention this is prevented in that the electronics comprises a transmitter for transmitting signals, in particular data measured by the sensors.

When the electronics comprises a receiver for receiving the control signals, commands can be sent to the electronics. Such commands may not only comprise the performance of measurements, but also the control of certain components of the device. There is preferably used a transmitter-receiver for transmitting and receiving the signals.

In the case of a device for spreading granular and/or pulverulent material the angle assumed by the blade relative to its point of rotation is preferably adjustable by angle adjusting means. The angle adjusting means are driven in an advantageous manner by drive means, so that manual adjustment of the angular position is superfluous and adjustment errors caused by manual adjustment are prevented.

The device is preferably provided with angle measuring sensors for measuring the angle of the blade. The measurement results from the angle measuring means may be used i.a. for checking purposes.

An extremely accurate and user-friendly device is provided when there are provided control means, in particular comprising a computer, having an input means for inputting data. There is preferably provided a calculating member for calculating the control signals to be issued by the control means.

The rotatable tool preferably comprises an actuator controlled by signals originating from the control means.

In an embodiment of a device according to the invention there is provided an auger for supplying granular and/or pulverulent material, in particular fertiliser, to the blade. The auger is preferably driven independently of the blade for the purpose of emptying a hopper for granular and/or pulverulent material in a simple manner.

If there is provided a sensor for measuring the number of revolutions per minute of the auger, measures can be taken in dependence of the measured value. When for example the number of revolutions per minute of the auger suddenly decreases to below a lower threshold, or decreases too quickly, there may occur a greater torque due to overload. In this situation a signal may be given to stop the rotation of the auger and possibly the blade. Moreover, the rotation may be controlled by a calculating member or from the control means, so that in dependence of inputted, read and measured momentary values the number of revolutions per minute can be adjusted or fine-adjusted.

For the purpose of adjusting the point where the auger supplies the material to the blade, the angle of the auger relative to the blade is adjustable. There is preferably provided a sensor for measuring the angle of the auger.

The invention will be explained hereinafter in further detail by way of example with reference to embodiments shown in the drawing, in which:
Figure 1 is a schematic side view of a device for spreading fertiliser according to the invention, said device being fastened to a tractor;
Figure 2 is a schematic plan view of a device for spreading fertiliser according to the invention;
Figure 3 is a schematic cross-sectional view of a part of an embodiment of a blade;
Figure 4 is a schematic cross-sectional view of a part of an alternative embodiment of a blade;
Figure 5 is a schematic view of control means to be used in a device for spreading fertiliser according to an embodiment of the invention;
Figure 6 is a schematic view of electric current generating means for a device for spreading fertiliser according to an embodiment of the invention;
Figure 7 is a schematic view of a blade with a load sensor for a device for spreading fertiliser according to an embodiment of the invention, and
Figure 8 is a schematic view of an embodiment of a device for spreading fertiliser according to the embodiment with an auger.

The invention will be explained in further detail with reference to a fertiliser spreader as a device for spreading granular and/or pulverulent material. However, it will be obvious that the invention may also be applied to a device for spreading other granular and/or pulverulent material, such as salt for icy roads, sand, pesticides, herbicides and the like, and to a device suitable for use in agriculture, said device comprising a rotatable tool. Further it will be obvious that the invention is not limited to the embodiments shown in the figures, but that within the scope of the claims other embodiments are possible as well.

The invention will be described hereinafter with reference to blades disposed on a spreading disc. However, it will be obvious that also self-supporting blades or blades mounted in another manner constitute part of the invention.

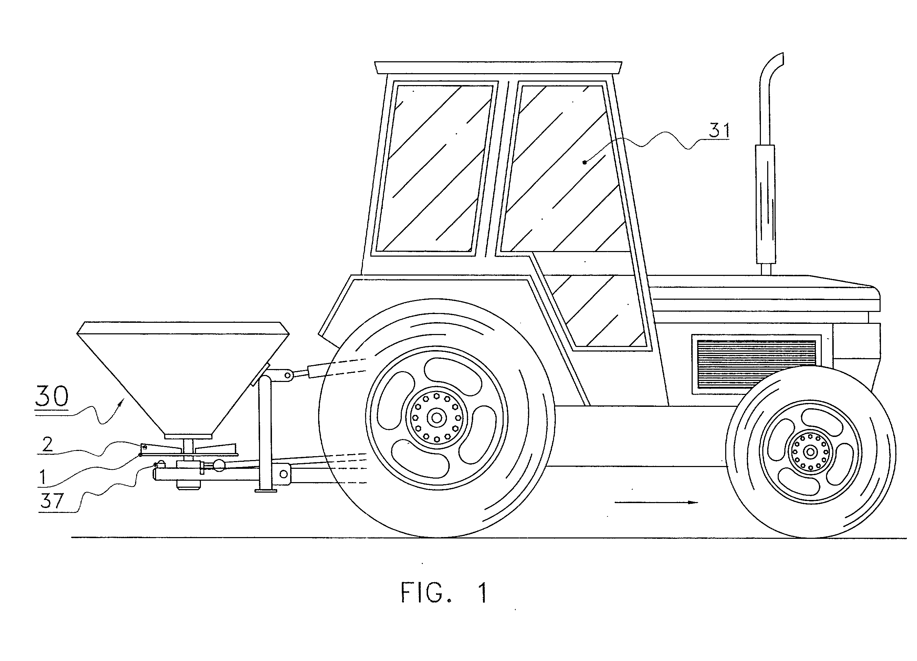

Figure 1 is a schematic perspective view of a fertiliser spreader 30 which is carried by a tractor 31. The fertiliser spreader 30 comprises a hopper 32 for fertiliser. A spreading disc 1 supporting at least one blade 2 is disposed centrally under the hopper 32. During rotation of the spreading disc 1, and along therewith of the blade, fertiliser coming from the hopper 32 will be spread by the blade 2. The degree of spreading, also called working range, depends i.a. on the weight and the granule size of the fertiliser, the rotational speed of the spreading disc, the length of the blade, the angular position of the blade on the spreading disc, the place where the fertiliser hits the blade and the height adjustment of the end of the blade relative to the spreading disc.

It is known to adjust the length of the blade in that the blade 2; 2'; 2" comprises a first blade portion 3; 3'; 3" and a second blade portion 4; 4'; 4", the first blade portion 3; 3'; 3" and the second blade portion 4; 4'; 4" being shiftable relative to each other in a telescoping manner. At least one 4; 4'; 4" of the blade portions is then longitudinally adjustable relative to the other blade portion 3; 3'; 3" and lockable in various positions.

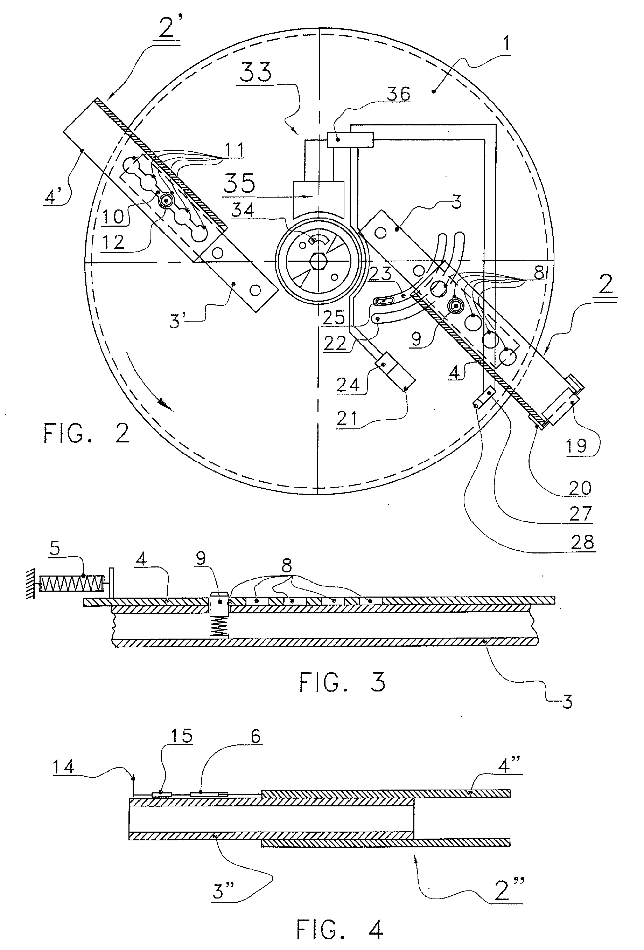

As shown schematically with reference to Figures 2, 3 and 4, one blade portion 4; 4'; 4" is lockable exclusively in a limited number of positions. This implies a considerable simplification of the adjustment of the length of the blade, so that adjustment errors can be prevented at least for the greater part. For that purpose the second blade portion 4 in Figure 2 has a row of apertures 8. The first blade portion 3 is provided with a movable cam 9 (see Figure 3) which is movable from a retracted to a projecting position. Said cam 9 can thus be put in an aperture 8 and consequently lock the mutual position. The cam 9 can be compared with the protrusion that locks the telescoping tubes of a telescopic umbrella.

Of course, other locking means may be applied, and it is also possible that the first blade portion comprises the apertures and the second blade portion comprises the cam. Further the apertures may be provided in walls of the blade portions.

Alternatively, the second blade portion 4' may be provided with an elongated slotted hole 10 with lateral recesses 11, and the first blade portion 3' may be provided with a pin 12 which is movable from a retracted to a projecting position. Thus the pin 12 can be placed in a recess 11 so as to lock in this manner the position of the blade portions relative to each other. Also in this situation other locking means are possible as well, and the slotted hole may also be provided in the other blade portion.

Positioning of the locking means takes place for example by spring force, although it may also take place pneumatically, hydraulically, or electromagnetically.

Therefore, locking one blade portion in the limited number of positions is automatically, mechanically performed. The person skilled in the art has numerous means at his disposal for realising this.

As shown by way of example in Figure 3 with reference to an embodiment, pre-tensioning members 5 force the blade portion 4 to at least one of the limited number of positions. Said pre-tensioning members 5, in the embodiment shown constituted by a spring although other means such as pneumatic, hydraulic or electromagnetic means are possible as well, ensure that the mutual position of the blade portions is always one of the limited number of positions.

The shiftable blade portion may be drawn or pushed manually into one of the limited number of positions, the position being locked by snapping of the protrusion or the pin.

Figure 4 shows schematically an embodiment in which the device comprises drive means 6 for shifting one blade portion 4" to a position in a driven manner. As a result thereof manual positioning is no longer required, which implies moreover an extra protection for the operating person. The drive means 6, also here constituted by e.g. pneumatic, hydraulic or electromagnetic drive means, are controlled by control means 7, preferably electronic control means.

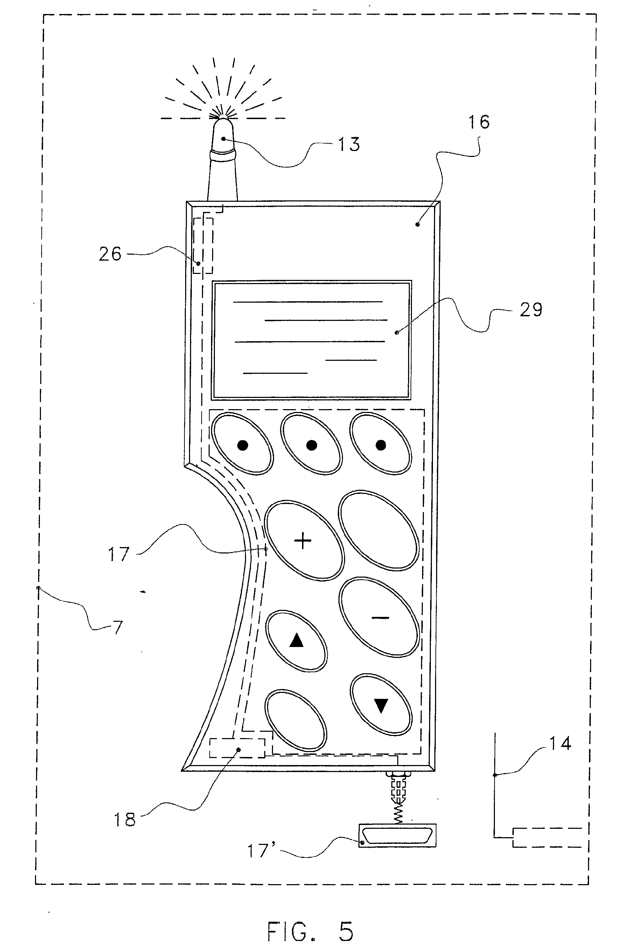

Such control means are schematically shown in Figure 5. They comprise a transmitter 13 for transmitting control signals. The control signals are received by a receiver 14. The receiver 14 is connected with an activating member 15 for the drive means 6. The activating member 15 activates the drive means 6 in dependence of the control signals received. Thus one blade portion 4" is shifted in dependence of the control signals transmitted. The invention relates i.a. to the electric current supply of such an activating member 15.

The control means 7 may comprise a computer 16 which is provided with an input means 17, 17' for inputting data. On the basis of the inputted data, a calculating member 18 calculates control signals corresponding with the inputted data for shifting one blade portion 4". Of course, the control signals are supplied to the transmitter 13. In this situation the calculating member may use for example a correspondence table stored in a memory. The values included in the correspondence table may be determined for example on the basis of spreading trials of fertiliser. The input of the data may take place manually by using a keyboard, touch screen, or the like.

For example, in the latter case the presence of a display screen 29 is required. Said display screen 29 may be used for checking the input of the data, but may also be used for making the adjustments of e.g. the length of the blades more user-friendly. By correct programming, for example, it is possible to request the user to input the necessary data, so that no actions are forgotten. For example, on the display screen 29 the request may appear to adjust the working range, to input the type and weight of the fertiliser and the like. In dependence of the correspondence table the adjustment of the blades can then take place in a fully computerised manner.

The input of data, in particular regarding the fertiliser, takes place in a simple manner when the input means comprise a scanning device 17' for a code, in particular a bar code, said bar code being applied to a container, e.g. a bag, of fertiliser. The code represents data regarding the contents of the container. The data relate at least to one of the characteristics belonging to the group consisting of the weight, the spreading in weight, the granule size, the spreading in granule size. In this situation, the scanning device 17' is used for reading the bar code on the container, and the correct data are automatically stored in the control means.

Therefore, such a container for fertiliser, provided with a bar code, said bar code representing data regarding the contents of the container, can advantageously be used in the device for spreading fertiliser.

There may be provided position measuring means 21 for measuring the position of the first blade portion 3; 3'; 3" relative to the second blade portion 4; 4'; 4". Such position measuring means 21 may be of a great variety, as known to the person skilled in the art, and photo sensors, sliding contacts and the like are possible without any doubt. The invention relates i.a. to the electric current supply of such position measuring means 21.

The blade 2, in particular the blade portion 4, is provided with an end portion 19 which is adjustable in height. Said end portion 19 is drivable by end portion drive means 20, so that adjustment by manual shifting or pushing is no longer necessary. The invention relates i.a. to the electric current supply of such end portion drive means 20.

There are provided height measuring means 27 for measuring the height of the adjustable end portion 19. The invention further relates i.a. to the electric current supply of such height measuring means 27, and other electronics, sensors or similar electric current consuming components (whether or not described herein).

The angle assumed by the blade 2 relative to the spreading disc 1 is adjustable by angle adjusting means 22. The angle adjusting means 22 are driven. The drive means for the angle adjusting means may also here be constituted by e.g. pneumatic, hydraulic or electromagnetic drive means, and may be controlled by the control means 7. Although the angle adjustment is shown with reference to the blade 2, it will be obvious that all the blades have an angle adjustment.

The fertiliser spreader is provided with angle measuring means 23 for measuring the angle of the blade 2 relative to the spreading disc 1.

The adjustments measured may be used for checking purposes. The measuring means 21, 23, 27 may be provided with transmitting members 24; 25; 28 for transmitting measurement results to the control means 7. In this case the transmitter 13 is designed, of course, as a transmitter-receiver. The measurement results can thus be made visible on the display screen 29. The receiver 14 may also be designed as a transmitter-receiver. When the measured values deviate from the inputted values (via the correspondence table) a warning signal can be issued. For that purpose the control means 7 are provided with comparing means 26 for comparing the inputted data with the measurement results. In dependence of the comparison results, that are supplied to the calculation member, e.g. alarm signals are generated.

The control means 7 may further be constructed such that an automatic control takes place in dependence of the measured values, so that the measured values are regulated so as to reach the adjusted values.

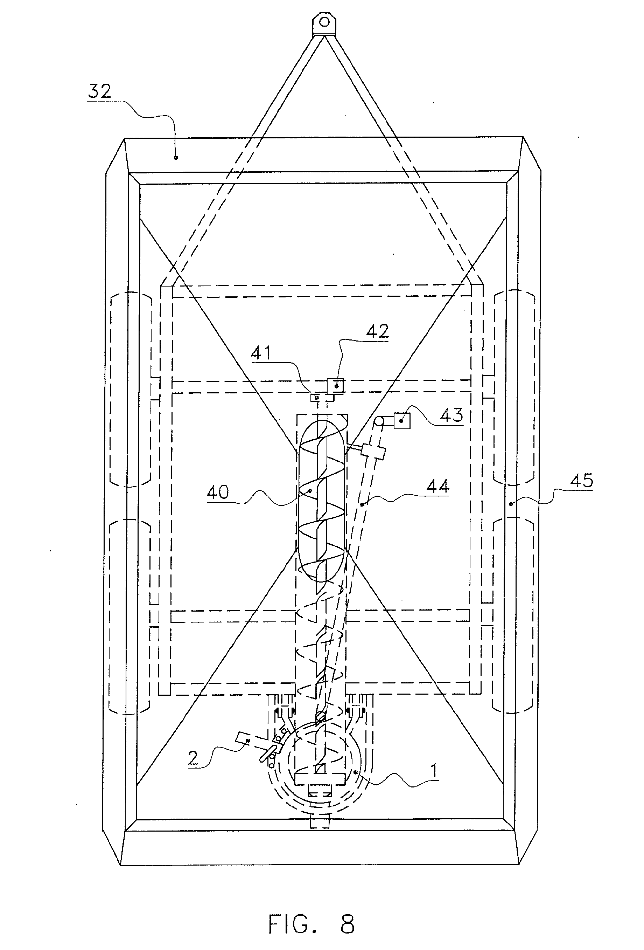

Figure 8 shows schematically a plan view of a fertiliser spreader, the spreading disc 1 not being disposed centrally under the hopper 32. For the purpose of transporting the fertiliser from the hopper 32 to the spreading disc 1, especially the blade 2, there is provided an auger 40. The auger 40 is driven by a motor 41 rotating the auger 40 independently of the spreading disc 1.

On the one hand, the auger 40 may be adjusted at different angles relative to the horizontal plane (the bottom plane of the hopper 32). The auger 40 may be adjusted at a positive angle, a negative angle and at an angle of zero degrees relative to the horizontal plane.

On the other hand, the angle of the auger 40 relative to the spreading disc 1 may be adjustable, e.g. by a cylinder 44. By operation of the cylinder 44 the angle between the longitudinal direction of the auger 40 and the side wall 45 of the hopper 32 can thus be adjusted. The point where the auger 40 drops fertiliser on the spreading disc 1 (in particular the blade 2) is thus adjustable.

As already noted one or twice in the foregoing, the invention relates to the electric current supply of electric current consuming components on the fertiliser spreader, in particular those components that are disposed on the spreading disc 1 and the blade 2. Of course, also electric current consuming components, such as cameras, radars, GPS-systems and the like, which are disposed elsewhere on the fertiliser spreader, such as on the hopper 32, may be provided with electric current. According to the invention, for that purpose the device is provided with electric current generating means 33 for generating electric current from the rotation of the blade 2; 2'; 2".

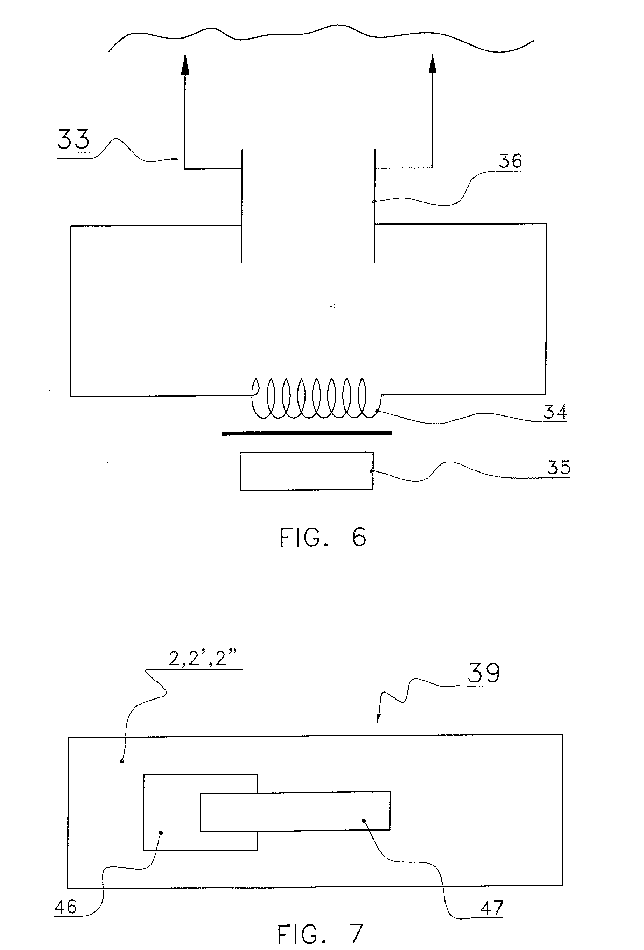

The electric current generating means 33 may be constituted by a dynamo with a stator 34 and a rotor 35, as shown schematically in Figure 6. In a non-shown embodiment the rotor 35 may be disposed on the blade 2; 2'; 2".

Figure 2 shows an embodiment in which the rotor 35 is disposed on the spreading disc 1. In a manner known per se the rotor 35 is constituted by a coil. The stator 34 may be constituted by a coil or a magnet. Other forms of electric current generating means, such as those which are equal to or equivalent to bicycle dynamos, motorcar dynamos, etc. may be used as well. A further description thereof is omitted, because the relevant embodiments are known to the person skilled in the art. For example, it is also possible, of course, to use a device by means of which generated alternating current is converted into direct current, or vice versa. Further it is known to the person skilled in the art to cast electric current-sensitive components, such as e.g. the coils, in synthetic material or the like, for preventing them from being damaged and protecting them against water and other undesired environmental conditions.

For having the possibility also to supply electric current when the blade is not rotating, there is provided an electric current accumulator 36 which is connected with the electric current generating means 33. Such an electric current accumulator may be constituted by an accumulator, a rechargeable battery, a condenser or the like.

The generated electric current may be passed to the relevant components, as schematically shown by lines in Figure 2 for a number of components.

Besides the above-described sensors, and drive means that are driven by the electric current generated by the rotation, also other sensors may be fed with electric current.

Particularly useful is a sensor 37 for measuring the number of revolutions per minute of the blade 2; 2'; 2". The number of revolutions per minute of the blade is a quantity that plays a part i.a. in the spreading and working width of the fertiliser spreader. The measured data may be used e.g. for historical data, or for checking purposes, but also for fine-adjustment. In the latter case the measured data in the control means 7 are compared with the inputted data, and on deviation the corresponding, correcting control signals are issued.

Furthermore, force measurement on the blade 2; 2'; 2" may be advantageous to the control of the functioning of the fertiliser spreader. For that purpose, as shown schematically in Figure 7, the blade 2; 2'; 2" is provided with a load sensor 39, constituted by a loose plate 46 and a load cell 47, for measuring the force exerted by the fertiliser. One end of the load cell 47 is fastened to the plate 46 and its other end is fastened to the blade 2; 2'; 2". The measured values are indicative to the quantity of fertiliser supplied, which is accordingly updated, checked and, if required, fine-adjusted with the aid of the control means 7.

When a series of load sensors are disposed, it is possible to measure the behaviour of the fertiliser across the blade 2; 2'; 2", said behaviour being relevant to i.a. the spread pattern of the fertiliser.

There may further be provided a sensor 42 for measuring the number of revolutions per minute of the auger 40. Said sensor 42 may be used for issuing a signal when the spreading disc 1 is not rotating, whereas the auger 40 is rotating. Further the number of revolutions per minute of the auger 40 is relevant to the determination of the quantity of fertiliser supplied to the spreading disc 1. By measuring the number of revolutions per minute of the auger 40 it is thus possible to realise a check, and preferably, if required, a fine-adjustment of the quantity of fertiliser to be supplied.

Furthermore, analysis of the measured number of revolutions per minute of the auger 40 may be used for safety purposes, in particular when said analysis shows that the number of revolutions per minute has come below a lower threshold or when the number of revolutions per minute suddenly strongly decreases. If these situations occur, the motor 41 may be put out of operation and, if required, also the motor for driving the spreading disc 1.

The point where the auger 40 supplies the fertiliser to the blade 2; 2'; 2" is determined by the angle assumed by the auger 40 in the horizontal plane. Said angle is measured by a sensor 43.

## Claims

1. A device suitable for use in agriculture, said device being provided with a rotatable tool (2; 2'; 2"), **characterized in that** the device is provided with electric current generating means (33) for generating electric current from the rotation of the rotatable tool (2; 2'; 2").

2. A device as claimed in claim 1, **characterized in that** the electric current generating means (33) are at least substantially disposed on the rotatable tool (2; 2'; 2").

3. A device as claimed in claim 1 or 2, **characterized in that** the device comprises electronics, such as sensors (21, 23, 27, 37, 38, 39, 42, 43), said electronics being fed with electric current generated by the electric current generating means (33).

4. A device as claimed in claim 3, **characterized in that** electronics, such as sensors (21, 23, 27, 37, 38, 39, 42, 43), is disposed on the rotatable tool (2; 2'; 2").

5. A device as claimed in claim 3 or 4, **characterized in that** the device is provided with a sensor (37) for measuring the number of revolutions per minute of the rotatable tool (2; 2'; 2").

6. A device as claimed in claim 3, 4 or 5, **characterized in that** the electronics comprises a transmitter (13) for transmitting signals.

7. A device as claimed in any one of the preceding claims 3 through 6, **characterized in that** the electronics comprises a receiver (14) for receiving the control signals.

8. A device as claimed in any one of the preceding claims 3 through 7, **characterized in that** the device comprises control means (7) with an input means (17, 17') for inputting data.

9. A device as claimed in claim 8, **characterized in that** the control means (7) are provided with a calculating member (18) for calculating control signals to be issued by the control means (7).

10. A device as claimed in claim 8 or 9, **characterized in that** the input means comprise a scanning device (17') for a code, in particular a bar code.

11. A device as claimed in claims 8 through 10, **characterized in that** the control means (7) are provided with comparing means (26) for comparing the inputted data with the measurement results.

12. A device as claimed in any one of the preceding claims 8 through 11, **characterized in that** the rotatable tool (2; 2'; 2") comprises an actuator (6) controlled by signals originating from the control means (7).

13. A device as claimed in any one of the preceding claims, **characterized in that** the electric current generating means (33) are constituted by a dynamo with a stator (34) and a rotor (35).

14. A device as claimed in claim 13, **characterized in that** the rotor (35) is disposed on the rotatable tool (2; 2'; 2").

15. A device as claimed in claim 13 or 14, **characterized in that** the rotor (35) is constituted by a coil.

16. A device as claimed in claim 13, 14 or 15, **characterized in that** the stator (34) is constituted by a magnet.

17. A device as claimed in any one of the preceding claims, **characterized in that** an electric current accumulator (36) is connected with the electric current generating means (33).

18. A device as claimed in any one of the preceding claims, **characterized in that** the device is constituted by a device for spreading granular and/or pulverulent material, in particular fertiliser, the rotatable tool being constituted by a rotatable blade (2; 2'; 2").

19. A device as claimed in claim 18, **characterized in that** the device is provided with a spreading disc (1) on which the blade (2; 2'; 2") is disposed.

20. A device as claimed in claims 13 and 19, **characterized in that** the rotor (35) is disposed on the spreading disc (1).

21. A device as claimed in claims 19 and 3 or 20 and 3, **characterized in that** electronics, such as sensors (21, 23, 27, 37, 38, 39, 42, 43), is disposed on the spreading disc (1).

22. A device as claimed in claims 3 and 18, **characterized in that** the blade (2; 2'; 2") is provided with a load sensor (39) for measuring the force exerted by the granular and/or pulverulent material, in particular fertiliser.

23. A device as claimed in claim 22, **characterized in that** the blade (2; 2'; 2") is provided with a series of load sensors, each of which being suitable for measuring the force exerted by the granular and/or pulverulent material, in particular fertiliser.

24. A device as claimed in any one of the preceding claims 18 through 23, **characterized in that** the angle of the blade (2; 2'; 2") relative to its point of rotation is adjustable by angle adjusting means (22).

25. A device as claimed in claim 24, **characterized in that** the angle adjusting means (22) are driven by drive means (6).

26. A device as claimed in claim 18, **characterized in that** the device is provided with angle measuring sensors (23) for measuring the angle of the blade (2; 2'; 2").

27. A device as claimed in any one of the preceding claims 18 through 26, **characterized in that** the device is provided with an auger (40) for supplying granular and/or pulverulent material, in particular fertiliser, to the blade (2; 2'; 2").

28. A device as claimed in claim 27, **characterized in that** the auger (40) is driven by a motor (41) independently of the blade (2; 2'; 2").

29. A device as claimed in claim 27 or 28, **characterized in that** there is provided a sensor (42) for measuring the number of revolutions per minute of the auger (40).

30. A device as claimed in claim 29, **characterized in that** the control means (7) are suitable for comparing the measured number of revolutions per minute of the auger (40) with a lower threshold.

31. A device as claimed in any one of the preceding claims 27 through 30, **characterized in that** the angle of the auger (40) relative to the blade (2; 2'; 2") is adjustable.

32. A device as claimed in claim 31, **characterized in that** there is provided a sensor (43) for measuring the angle of the auger (40).
